# EUROPEAN PATENT APPLICATION

(11) **EP 4 459 016 A1**
(43) Date of publication of application: **06.11.2024**
(21) Application number: 22913428.3
(22) Date of filing: 24.08.2022
(51) Int. Cl.: D01F 8/14, C08G 63/692

(54) **METHOD FOR PREPARING CATIONIC DYEABLE FLAME-RETARDANT HIGH-STRENGTH POLYESTER FIBER**

(30) Priority: 31.12.2021 CN 202111655078
(71) Applicant: Jiangsu New Horizon Advanced Functional Fiber Innovation Center Co., Ltd., Suzhou, Jiangsu 215228 (CN)
(72) Inventor: XU, Jinlong, Suzhou, Jiangsu 215228 (CN); TIAN, Huishuang, Suzhou, Jiangsu 215228 (CN); WU, Xing, Suzhou, Jiangsu 215228 (CN); JI, Peng, Suzhou, Jiangsu 215228 (CN); MEI, Feng, Suzhou, Jiangsu 215228 (CN); WANG, Huaping, Suzhou, Jiangsu 215228 (CN)
(74) Representative: Franks & Co Limited
(86) International application number: PCT/CN2022/114407
(87) International publication number: WO 2023/124145

(57) **Abstract**

A method for preparing a cationic dyeable flame-retardant high-strength polyester fiber is provided, after mixing oligomer A, oligomer B, and ethylene terephthalate and carrying out a polycondensation reaction to obtain a cationic dyeable flame-retardant polyester masterbatch, adding the cationic dyeable flame-retardant polyester masterbatch to the polyester chips according to a certain ratio for melt spinning, to prepare the cationic dyeable flame-retardant high-strength polyester fiber; oligomer A is prepared by the esterification reaction of a phosphorus flame retardant and a diol; oligomer B is prepared by the esterification reaction of sodium isophthalate sulfonate and a diol; the ratio of the sum of the molar weight of oligomer A and oligomer B to the molar weight of ethylene terephthalate is 3:7-6:4. The preparation method of the invention is simple, the obtained cationic dyeable flame-retardant polyester masterbatch has high crystallinity and good fluidity, and the cationic dyeable flame-retardant high-strength polyester fiber prepared therefrom has excellent mechanical properties, and can be used in automobiles, ships, and the interior decoration of high-class hotels.

## Description

### Technical Field

The present invention belongs to the technical field of polymer materials, and more particularly, relates to a method for preparing a cationic dyeable flame-retardant high-strength polyester fiber.

### Background

Polyester has many excellent properties and is a high molecular polymer material widely used in various fields. However, due to its chemical structure and combustion characteristics, polyester fiber has a low limiting oxygen index (LOI), which is only about 21%, and its ignition temperature is very close to its decomposition temperature, making it very easy to burn. At the same time, the heat generated by PET fiber during combustion is much greater than its own melting heat, so the matrix is very easy to soften and form molten droplets. The molten droplets not only cause burns, but also easily cause secondary combustion, causing secondary damage to people. In addition, PET has a regular molecular structure, is easy to crystallize and has no dyeable functional groups, although it can be dyed with disperse dyes under high temperature and high pressure, the production conditions are harsh, the production cost is high, and the product color is not ideal.

Regarding the flame retardancy of polyester fibers, flame retardant modification is an important method to solve the flame retardancy of polyester non-intrinsic flame retardant polymer materials. With the in-depth research on flame retardants and flame retardant methods, various flame retardants and related flame retardant modification methods have developed rapidly. Currently, the flame-retardant polyester fiber is mainly prepared by the following methods:
the first method is to treat the surface of fibers and products with flame retardants; the second is to use flame-retardant materials during the spinning process; the third is to use flame-retardant materials for copolymerization. The first method has the problem of flame retardant effect and washability, as the number of washing times increases, the flame retardant on the surface of fiber products is significantly lost; the second method is generally to introduce nano-sized inorganic materials into the polymer to improve the flame retardant properties, which only be effective when the addition ratio is very high, while the high specific surface area of inorganic materials is difficult to disperse in high-viscosity polymer systems, resulting in a decrease in the spinnability of the polymer. The first two methods mainly suffer from poor dispersion of the flame retardant, and the third method can overcome the shortcomings of the first two methods and is therefore widely used.

There is a lot of public technical information on the dyeing of polyester fibers, and the dyeing performance of polyester fibers is generally improved by introducing components containing sulfonate groups for copolymerization at the stage of polyester synthesis, and the components containing sulfonate groups include sodium isophthalate sulfonate and its esterified substances.

The prior art prepares the polyester or the polyester fiber with both flame-retardant effect and dyeing effect by simultaneously introducing flame retardant and components containing sulfonate groups into polyester. Patent CN1359962A uses terephthalic acid and ethylene glycol as the first monomer and the second monomer, and uses reactive the phosphorus flame retardant and isophthalate containing sulfonate groups as the third monomer and the fourth monomer to obtain flame-retardant cationic dyeable polyester copolymer, and then spins polyester fiber with excellent flame retardancy and cationic dyeability; CN101864612A2 first reacts carboxyethyl hypophosphite (CEPPA) with sodium isophthalate sulfonate to generate flame-retardant cationic dyeable auxiliary agent, and then reacts with terephthalic acid (PTA) and ethylene glycol (EG) to obtain cationic dyeable halogen-free flame-retardant polyester, and further obtains cationic dyeable halogen-free flame retardant polyester fiber; CN103739832 discloses a method for preparing a cationic dye-dyable flame-retardant polyester resin, including the steps of subjecting a halogen-free copolymerized phosphorus-based flame retardant, ethylene glycol and a composite catalyst to an esterification reaction to obtain an esterified liquid of the halogen-free copolymerized flame retardant; subjecting sulfonic acid dimethyl isophthalate and ethylene glycol to an ester exchange reaction to obtain a sulfonate-based dihydroxyethyl isophthalate solution; subjecting terephthalic acid (or dimethyl terephthalate), ethylene glycol and an auxiliary agent to an esterification reaction, and then adding a catalyst, a stabilizer, an auxiliary agent, a phosphorus-based flame retardant esterified liquid (or a phosphorus-based flame retardant prepolymer liquid) and a sulfonic acid-based dihydroxyethyl isophthalate solution to a condensation reaction.

However, since flame retardants and cationic dyeable components are introduced into polyester based on copolymerization reactions, the regularity of the polyester is reduced, resulting in a decrease in the original orientation and crystallinity of the polyester, and lower strength of the final polyester fiber, which affects applicability.

### Summary

The purpose of the invention is to solve the above problems existing in the prior art, and to provide a method for preparing a cationic dyeable flame-retardant high-strength polyester fiber.

To this end, the technical schemes of the invention are as follows:
A method for preparing a cationic dyeable flame-retardant high-strength polyester fiber, after mixing oligomer A, oligomer B, and ethylene terephthalate and carrying out a polycondensation reaction to obtain a cationic dyeable flame-retardant polyester masterbatch, adding the dried cationic dyeable flame-retardant polyester masterbatch (with a moisture content of less than 30 ppm) to polyester chips according to a certain ratio for melt spinning, to prepare the cationic dyeable flame-retardant high-strength polyester fiber;
wherein oligomer A is prepared by the esterification reaction of a phosphorus flame retardant and a diol; oligomer B is prepared by the esterification reaction of sodium isophthalate sulfonate and a diol;
wherein the degree of polymerization of oligomer A is 3-7; the degree of polymerization of oligomer B is 2-6; the invention must control the degree of polymerization of oligomer A and oligomer B , because the prepared masterbatch is a block copolymer, if the polymerization of oligomer A and oligomer B is too high or too low, it will lead to changes in the properties of the prepared masterbatch; when the polymerization of oligomer A and oligomer B is too high, it causes a decrease in the number of segments in the masterbatch, in which the proportion of ethylene terephthalate hard segments increases, and the fluidity of the masterbatch decreases significantly; when the polymerization of oligomer A and oligomer B is too low, it causes an increase in the number of segments in the masterbatch, in which the proportion of ethylene terephthalate hard segments decreases, and the crystallizability of the masterbatch decreases;
   wherein a ratio of the sum of the molar weight of oligomer A and oligomer B to the molar weight of ethylene terephthalate is 3:7-6:4; wherein the modified component composed of oligomer A and oligomer B must reach a certain proportion to achieve a modification effect; if the sum of the molar ratio of oligomer A and oligomer B is less than 30%, the content of the modified component composed of oligomer A and oligomer B in the prepared masterbatch is too low, and the amount of application must be very high to achieve the expected flame-retardant and dyeing effects, but it will have an adverse effect on the spinnability of the fiber; if the sum of the molar ratio of oligomer A and oligomer B is higher than 60%, the content of the modified component composed of oligomer A and oligomer B in the prepared masterbatch is too high, resulting in a low proportion of ethylene terephthalate hard segments in the prepared masterbatch, and a decrease in the crystallizability of the masterbatch, occuring bonding problems during the drying process of the masterbatch to affect the application. Therefore, the ratio of the sum of the molar weight of oligomer A and oligomer B to the molar weight of ethylene terephthalate must be strictly controlled.

The following preferred technology program is presented to give a detailed description for this invention:
The said method for preparing a cationic dyeable flame-retardant high-strength polyester fiber, wherein a molar ratio of the phosphorus flame retardant to sodium isophthalate sulfonate is 2:8-8:2; the sulfonate component and the phosphorus flame retardant in the masterbatch of the invention can produce a synergistic flame retardant effect, wherein the ratio of the phosphorus flame retardant to sodium isophthalate sulfonate must be within a specific range to achieve the synergistic flame retardancy; the ratio of molar amounts of the phosphorus flame retardant to sodium isophthalate sulfonate is within this range, which can avoid the problem of low fluidity of the prepared masterbatch due to the high content of sodium isophthalate sulfonate in the masterbatch (correspondingly, the low content of the phosphorus flame retardant), the decrease in melt fluidity due to the large ionic bond force of sodium isophthalate sulfonate, and the problem that the limiting oxygen index of the prepared masterbatch does not meet the design requirements; it can also avoid the problem of low carbonization and anti-melting droplet performance of the prepared masterbatch due to the low content of sodium isophthalate sulfonate in the masterbatch.

In addition, the phosphorus flame retardant form a sticky film of phosphoric acid and polyphosphoric acid on the surface of the polymer through thermal decomposition, making the polymer flame-retardant. Free radicals such as PO· and HPO. are generated during the combustion process, capturing active H· or OH· in the gas phase and achieve gas-phase flame retardant effect through the combination of free radicals, which can reduce the rate of thermal degradation rate of polymers. The ionic monomers of the sulfonate structure in the flame retardant system can form ion clusters in the molecular chain of the ionomer, forming a stable physical cross-linking network. After introducing, it can increase the melt strength of the ionomer, and at the same time cooperate with the phosphorus flame retardant to quickly form a stable and dense carbon layer to suppress the droplet phenomenon. The composite ratio of the phosphorus flame retardant and sodium isophthalate sulfonate must be controlled within a certain range. When the molar ratio of the phosphorus flame retardant to sodium isophthalate sulfonate is lower than 2:8, the low content of the phosphorus flame retardant in the flame retardant system will lead to a decrease in the ability to capture free radicals during combustion, showing a decrease in the limiting oxygen index; when the molar ratio of the phosphorus flame retardant to sodium isophthalate sulfonate is higher than 8:2, the high content of the phosphorus flame retardant in the flame retardant system will lead to an enhanced ability to capture free radicals during combustion, showing an increase in the limiting oxygen index, but a stable physical cross-linked network structure cannot be formed during combustion and a molten droplet problem is created.

The said method for preparing a cationic dyeable flame-retardant high-strength polyester fiber, wherein a preparation process of oligomer A or oligomer B is as follows: after mixing X, the diol and a catalyst, carrying out the esterification reaction under the protection of protective gas (nitrogen, etc.) to obtain oligomer A or oligomer B, X is the phosphorus flame retardant or sodium isophthalate sulfonate; the temperature of the esterification reaction is 140-220°C, the pressure is 0.01-0.5 MPa, and the time is 3-6 h; the temperature, pressure and time of the esterification reaction are set in such way to avoid the problem of insufficient reaction to reach the specified degree of polymerization, i.e., low molecular weight, due to their low values; it can also avoid the problem of too high values, which leads to too sufficient reaction and too high molecular weight of the synthesized product.

The said method for preparing a cationic dyeable flame-retardant high-strength polyester fiber, wherein the molar ratio of X to the diol is 1:1.15-1:1.5, and the mass of the catalyst is 0.001-0.05% of the mass of X; X is a bifunctional group, the diol is also a bifunctional group, the molar ratio of X to the diol is within this range, which can realize the full reaction of X and enhance the reaction rate, avoiding the slow reaction rate due to the amount of the diol is too small, the reaction rate decreases and affects the efficiency of the problem, especially when the amount of the diol is lower than X, which can not realize the full reaction of X; it also avoids the problem of a significant increase in the content of by-products due to the selfcondensation reaction that occurs when there is too much diol in excess due to a high amount of diol.

The said method for preparing a cationic dyeable flame-retardant high-strength polyester fiber, wherein the phosphorus flame retardant is more than one selected from CEPPA (2-carboxyethylphenyl hypophosphite), DDP ([(6-oxo-6H-dibenzo[c,e][1,2]oxaphosphorin-6-yl)methyl]succinic acid) and BCPPO (bis(p-carboxyphenyl)phenylphosphine oxide), and the purity reaches more than 99%; wherein the diol is ethylene glycol, propylene glycol, butylene glycol or pentanediol; and the catalyst is ethylene glycol antimony or ethylene glycol titanium.

The said method for preparing a cationic dyeable flame-retardant high-strength polyester fiber, wherein the temperature of the polycondensation reaction is 220-280°C, an absolute pressure is below 100 Pa (absolute pressure is a technical term, gauge pressure = absolute pressure - atmospheric pressure), and the time is 3-5 h; the number average molecular weight of the cationic dyeable flame-retardant polyester masterbatch is 15000-25000 g/mol, the melt index is 30-90 g/10min, the semi-crystallization time t_{1/2} (test method is DSC non-isothermal crystallization method) is 3-15 min, and the crystallinity (test method is XRD method) is 20-40%. It can be seen that the cationic dyeable flame-retardant polyester masterbatch has good crystallinity and fluidity, the good crystallization performance of the masterbatch ensures that the masterbatch can be fully dried before spinning, and will not be unusable due to poor crystallization performance that leads to adhesion in the drying process; the good fluidity can make the masterbatch easy to disperse in the outer layer of the melt, that is, the surface of the fiber when blended with polyester, so that the flame-retardant functional components can be distributed on the surface as much as possible to achieve the maximum modification effect.

The said method for preparing a cationic dyeable flame-retardant high-strength polyester fiber, wherein the mass ratio of the cationic dyeable flame-retardant polyester masterbatch to the polyester chip is 4:96-12:88; an intrinsic viscosity of the polyester chip is 0.60-1.10 dL/g, and the melt index is 15-30 g/10min.

The said method for preparing a cationic dyeable flame-retardant high-strength polyester fiber, wherein the cationic dyeable flame-retardant high-strength polyester fiber is a POY fiber or a DTY fiber made from the POY fiber;
wherein spinning process parameters of the POY fiber are: a spinning box temperature of 250-300°C; a cooling and blowing temperature of 10-50°C, a wind speed of 0.1-1.5 m/s, a relative humidity of 55-95%; a first godet wheel speed of 2500-3500 m/min, a second godet wheel speed of 2500-3500 m/min, and a winding speed of 2500-3500 m/min;
wherein a preparation process of the DTY fiber includes: feeding the POY fiber into the first roller, and the DTY fiber is obtained through a yarn guide porcelain, a hot box, another yarn guide porcelain, a false twister, a second roller, an interlacing device, a third roller, a tanker, a winding roller and a wound DTY spindle.

The said method for preparing a cationic dyeable flame-retardant high-strength polyester fiber, wherein the cationic dyeable flame-retardant high-strength polyester fiber is an FDY fiber, and spinning process parameters are: a spinning box temperature of 250-300°C; a cooling and blowing temperature of 10-50°C, a wind speed of 0.1-1.5 m/s, a relative humidity of 55-95%; a roller speed of a first godet roller of 2500-3000 m/min, a roller speed of a second godet roller of 3000-4500 m/min, and a winding speed of 3000-4500 m/min.

The said method for preparing a cationic dyeable flame-retardant high-strength polyester fiber, wherein the cationic dyeable flame-retardant high-strength polyester fiber has an orientation degree (test method is microscope direct observation calculation method) ≥0.90, a tensile breaking strength ≥4.5 cN/dtex, a cationic dye uptake rate of more than 95%, and a limiting oxygen index (LOI) ≥30%. The cationic dyeable flame-retardant polyester fiber in the prior art has an orientation degree <0.9, a tensile breaking strength ≥2.5cN/dtex, a cationic dye uptake of 90-95%, and the LOI ≥30%.

The principle of the present invention is as follows:
The prior art forms flame-retardant easy-to-dye copolyester chips, and the core of the present invention is to form a high-proportion copolymerized cationic dyeable flame-retardant polyester masterbatch. The invention is to react the flame retardant and the cationic dyeable component with the diol to generate oligomer A and oligomer B respectively, and then mix the oligomer A and oligomer B with ethylene terephthalate at the same time, and remove the small molecule diol through transesterification to form a copolymer product (cationic dyeable flame-retardant polyester masterbatch). Both oligomer A and oligomer B are controlled to have a certain molecular weight in the invention, and are capped with excessive diols, and have high transesterification reaction activity, by adjusting the addition ratio and reaction parameters, the formed product has a block structure. The block copolymer has the characteristics of general block polymers: a controllable molecular weight, a narrow molecular weight distribution, and a designable molecular structure and composition, wherein oligomer A and oligomer B are soft segments, and ethylene terephthalate is a hard segment.

Although there are publicly reported products obtained by esterification reaction of the phosphorus flame retardant, sodium isophthalate sulfonate and the diol in the prior art, the invention emphasizes that the phosphorus flame retardant, sodium isophthalate sulfonate and the diol are esterified step by step to prepare oligomers and then copolymerize, so that the sequence structure of the prepared cationic dyeable flame-retardant polyester masterbatch can be controlled, rather than a random structure, wherein the hard segment of the cationic dyeable flame-retardant polyester masterbatch is a part with good crystallizability, and by changing the ratio of the components of the soft segment and the hard segment, the crystallizability of the masterbatch can be regulated, ensuring that the masterbatch has practical application value. In addition, the fluidity of the masterbatch is greatly different from that of conventional polyester, and by adjusting the soft and hard ratio, the masterbatch can be realized to have a higher fluidity, so that the difference in fluidity between the masterbatch and the polyester will form a blending effect of a microphase separation structure, so that the masterbatch is easier to disperse on the surface of the fiber after blending with the polyester, so that the cationic dyeable component and the flame retardant component can play a greater role.

At present, the preparation of functional copolyesters, including the preparation of flame-retardant cationic dyeable copolyesters, is an important aspect, but the more important aspect is how to ensure the spinnability of functional copolyesters and the strength of fibers. The good mechanical properties of polyester fibers themselves are an important reason for their wide application, but after the copolymer components are introduced into the prior art, the original polyester spinnability and the mechanical properties of the fibers are significantly reduced, which is because the introduction of functional components into the polyester destroys the original regularity and reduces the strength of the fibers. Introducing functional masterbatches into polyester melts for spinning by blending and modification has little effect on the regularity of polyester and the orientation of the fibers, therefore, the mechanical strength of the fibers is not significantly affected, while achieving cationic dyeability and flame retardant functions, the original mechanical strength of the fibers is maintained.

Benefits:
(1) The cationic dyeable flame-retardant high-strength polyester fiber prepared by the cationic dyeable flame-retardant polyester masterbatch of the invention, the fiber has a limiting oxygen index of more than 30 and has good flame retardant performance. When the masterbatch undergoes high-temperature melting during the combustion process, the ionic groups in the PET molecular chains of the melt drive the molecular chains to aggregate, and the high-density molecular chains promote the formation of a carbon layer on the surface of the polyester combustion and increase the viscosity of the melt after high-temperature melting, thereby improving the flame retardant and anti-melting droplet properties of PET, which belongs to the condensed phase flame retardant and has the characteristics of good flame retardant effect, long-lasting flame retardant performance, anti-melting droplet, halogen-free, low toxicity and good safety;
(2) the cationic dyeable flame-retardant polyester masterbatch prepared by the invention is a macromolecular polymer, adding the masterbatch to the polyester in a certain proportion slightly affects the spinnability of the polyester; the macromolecular masterbatch and the polyester are blended to ensure the blending compatibility while not affecting the original tensile orientation of the polyester, thereby achieving compatibility between function and mechanical strength;
(3) the cationic dyeable flame-retardant high-strength polyester fiber prepared by the cationic dyeable flame-retardant polyester masterbatch of the invention, can be used in automobiles, ships, the interior decoration of high-class hotels, national defense and military industry, and special labor protection equipment.

### Brief Description Of The Drawings

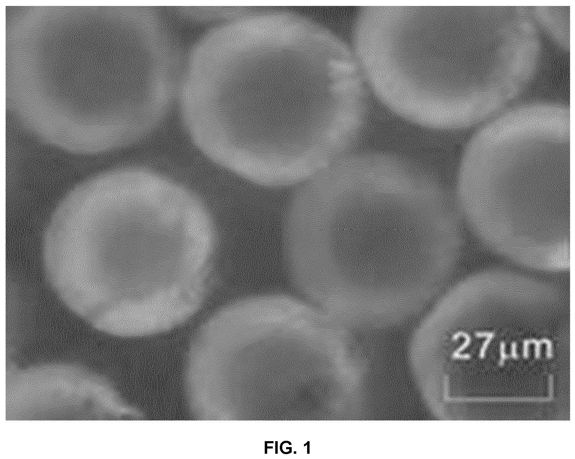

FIG. 1 is a SEM image of a cross section of the cationic dyeable flame-retardant high-strength polyester fiber prepared by the cationic dyeable flame-retardant polyester masterbatch of Example 6.

### Detailed Description Of The Embodiments

Based on above mentioned method, the following embodiments are carried out for further demonstration in the present invention. It is to be understood that these embodiments are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

### Example 1

A method for preparing a cationic dyeable flame-retardant high-strength polyester fiber, the specific steps are as follows:
(1) preparation of raw materials;
   CEPPA as the phosphorus flame retardant;
   ethylene glycol as the diol;
   ethylene glycol antimony as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 220°C, the pressure is 0.5 MPa, and the time is 3h; wherein the molar ratio of the phosphorus flame retardant to the diol is 1:1.15, and the mass of the catalyst is 0.001% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 220°C, the pressure is 0.5 MPa, and the time is 3h; wherein the molar ratio of sodium isophthalate sulfonate to the diol is 1:1.15, and the mass of the catalyst is 0.001% of the mass of sodium isophthalate sulfonate;
(4) mixing oligomer A, oligomer B and ethylene terephthalate, then carrying out the polycondensation reaction at a temperature of 280°C and an absolute pressure of 100 Pa for 5 hours to obtain the cationic dyeable flame-retardant polyester masterbatch; wherein the ratio of the sum of the molar weight of oligomer A and oligomer B to the molar weight of ethylene terephthalate is 3:7; the ratio of the molar amount of the phosphorus flame retardant when preparing oligomer A to the molar amount of sodium isophthalate sulfonate when preparing oligomer B is 2:8;
   the obtained cationic dyeable flame-retardant polyester masterbatch has a number average molecular weight of 25000 g/mol, a melt index of 30 g/10min, a semi-crystallization time t_{1/2} of 3 min, and a crystallinity of 40%;
(5) adding the dried cationic dyeable flame-retardant polyester masterbatch with a moisture content of 29 ppm to polyester chips in a mass ratio of 4:96 for melt spinning to prepare the cationic dyeable flame-retardant high-strength polyester fiber; wherein the intrinsic viscosity of the polyester chip is 0.6 dL/g and the melt index is 30 g/10min;
the spinning process is a spinning process of the POY fiber, and the spinning process parameters are: a spinning box temperature of 250°C; a cooling and blowing temperature of 50°C, a wind speed of 0.1 m/s, a relative humidity of 55%; a first godet wheel speed of 2500 m/min, a second godet wheel speed of 2500 m/min, and a winding speed of 2500 m/min.

### Example 2

A method for preparing a cationic dyeable flame-retardant high-strength polyester fiber, the specific steps are as follows:
(1) preparation of raw materials;
   DDP as the phosphorus flame retardant;
   propylene glycol as the diol;
   ethylene glycol antimony as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 190°C, the pressure is 0.4 MPa, and the time is 4h; wherein the molar ratio of the phosphorus flame retardant to the diol is 1:1.2, and the mass of the catalyst is 0.007% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 190°C, the pressure is 0.3 MPa, and the time is 5h; wherein the molar ratio of sodium isophthalate sulfonate to the diol is 1:1.3, and the mass of the catalyst is 0.007% of the mass of sodium isophthalate sulfonate;
(4) mixing oligomer A, oligomer B and ethylene terephthalate, then carrying out the polycondensation reaction at a temperature of 260°C and an absolute pressure of 90 Pa for 4 hours to obtain the cationic dyeable flame-retardant polyester masterbatch; wherein the ratio of the sum of the molar weight of oligomer A and oligomer B to the molar weight of ethylene terephthalate is 4:6; the ratio of the molar amount of the phosphorus flame retardant when preparing oligomer A to the molar amount of sodium isophthalate sulfonate when preparing oligomer B is 3:7;
   the obtained cationic dyeable flame-retardant polyester masterbatch has a number average molecular weight of 22000 g/mol, a melt index of 40 g/10min, a semi-crystallization time t_{1/2} of 5 min, and a crystallinity of 35%;
(5) adding the dried cationic dyeable flame-retardant polyester masterbatch with a moisture content of 28 ppm to polyester chips in a mass ratio of 6:94 for melt spinning to prepare the cationic dyeable flame-retardant high-strength polyester fiber; wherein the intrinsic viscosity of the polyester chip is 0.7 dL/g and the melt index is 25 g/10min;
   the spinning process is a spinning process of the POY fiber, and the spinning process parameters are: a spinning box temperature of 260°C; a cooling and blowing temperature of 45°C, a wind speed of 0.4 m/s, a relative humidity of 60%; a first godet wheel speed of 2700 m/min, a second godet wheel speed of 2700 m/min, and a winding speed of 2700 m/min.

### Example 3

A method for preparing a cationic dyeable flame-retardant high-strength polyester fiber, the specific steps are as follows:
(1) preparation of raw materials;
   BCPPO as the phosphorus flame retardant;
   butylene glycol as the diol;
   ethylene glycol antimony as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 160°C, the pressure is 0.3 MPa, and the time is 5h; wherein the molar ratio of the phosphorus flame retardant to the diol is 1:1.3, and the mass of the catalyst is 0.015% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 160°C, the pressure is 0.4 MPa, and the time is 4h; wherein the molar ratio of sodium isophthalate sulfonate to the diol is 1:1.2, and the mass of the catalyst is 0.019% of the mass of sodium isophthalate sulfonate;
(4) mixing oligomer A, oligomer B and ethylene terephthalate, then carrying out the polycondensation reaction at a temperature of 240°C and an absolute pressure of 95 Pa for 3 hours to obtain the cationic dyeable flame-retardant polyester masterbatch; wherein the ratio of the sum of the molar weight of oligomer A and oligomer B to the molar weight of ethylene terephthalate is 5:5; the ratio of the molar amount of the phosphorus flame retardant when preparing oligomer A to the molar amount of sodium isophthalate sulfonate when preparing oligomer B is 4:6;
   the obtained cationic dyeable flame-retardant polyester masterbatch has a number average molecular weight of 20000 g/mol, a melt index of 50 g/10min, a semi-crystallization time t_{1/2} of 7 min, and a crystallinity of 30%;
(5) adding the dried cationic dyeable flame-retardant polyester masterbatch with a moisture content of 26 ppm to polyester chips in a mass ratio of 7:93 for melt spinning to prepare the cationic dyeable flame-retardant high-strength polyester fiber; wherein the intrinsic viscosity of the polyester chip is 0.8 dL/g and the melt index is 22 g/10min;
   the spinning process is a spinning process of the POY fiber, and the spinning process parameters are: a spinning box temperature of 270°C; a cooling and blowing temperature of 35°C, a wind speed of 0.8 m/s, a relative humidity of 70%; a first godet wheel speed of 2900 m/min, a second godet wheel speed of 2900 m/min, and a winding speed of 2900 m/min.

### Example 4

A method for preparing a cationic dyeable flame-retardant high-strength polyester fiber, the specific steps are as follows:
(1) preparation of raw materials;
   CEPPA as the phosphorus flame retardant;
   pentanediol as the diol;
   ethylene glycol titanium as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 150°C, the pressure is 0.1 MPa, and the time is 6h; wherein the molar ratio of the phosphorus flame retardant to the diol is 1:1.4, and the mass of the catalyst is 0.035% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 155°C, the pressure is 0.2 MPa, and the time is 6h; wherein the molar ratio of sodium isophthalate sulfonate to the diol is 1:1.4, and the mass of the catalyst is 0.05% of the mass of sodium isophthalate sulfonate;
(4) mixing oligomer A, oligomer B and ethylene terephthalate, then carrying out the polycondensation reaction at a temperature of 230°C and an absolute pressure of 85 Pa for 3 hours to obtain the cationic dyeable flame-retardant polyester masterbatch; wherein the ratio of the sum of the molar weight of oligomer A and oligomer B to the molar weight of ethylene terephthalate is 6:4; the ratio of the molar amount of the phosphorus flame retardant when preparing oligomer A to the molar amount of sodium isophthalate sulfonate when preparing oligomer B is 6:4;
   the obtained cationic dyeable flame-retardant polyester masterbatch has a number average molecular weight of 18000 g/mol, a melt index of 80 g/10min, a semi-crystallization time t_{1/2} of 10 min, and a crystallinity of 25%;
(5) adding the dried cationic dyeable flame-retardant polyester masterbatch with a moisture content of 25 ppm to polyester chips in a mass ratio of 9:91 for melt spinning to prepare the cationic dyeable flame-retardant high-strength polyester fiber; wherein the intrinsic viscosity of the polyester chip is 1 dL/g and the melt index is 20 g/10min;
   the spinning process is a spinning process of the POY fiber, and the spinning process parameters are: a spinning box temperature of 290°C; a cooling and blowing temperature of 30°C, a wind speed of 1.2 m/s, a relative humidity of 95%; a first godet wheel speed of 3100 m/min, a second godet wheel speed of 3100 m/min, and a winding speed of 3100 m/min.

### Example 5

A method for preparing a cationic dyeable flame-retardant high-strength polyester fiber, the specific steps are as follows:
(1) preparation of raw materials;
   a mixture of DDP and CEPPA in a mass ratio of 1:1 as the phosphorus flame retardant;
   pentanediol as the diol;
   ethylene glycol titanium as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 140°C, the pressure is 0.01 MPa, and the time is 5h; wherein the molar ratio of the phosphorus flame retardant to the diol is 1:1.5, and the mass of the catalyst is 0.05% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 140°C, the pressure is 0.01 MPa, and the time is 5h; wherein the molar ratio of sodium isophthalate sulfonate to the diol is 1:1.5, and the mass of the catalyst is 0.04% of the mass of sodium isophthalate sulfonate;
(4) mixing oligomer A, oligomer B and ethylene terephthalate, then carrying out the polycondensation reaction at a temperature of 220°C and an absolute pressure of 80 Pa for 4 hours to obtain the cationic dyeable flame-retardant polyester masterbatch; wherein the ratio of the sum of the molar weight of oligomer A and oligomer B to the molar weight of ethylene terephthalate is 6:4; the ratio of the molar amount of the phosphorus flame retardant when preparing oligomer A to the molar amount of sodium isophthalate sulfonate when preparing oligomer B is 8:2;
   the obtained cationic dyeable flame-retardant polyester masterbatch has a number average molecular weight of 15000 g/mol, a melt index of 90 g/10min, a semi-crystallization time t_{1/2} of 15 min, and a crystallinity of 20%;
(5) adding the dried cationic dyeable flame-retardant polyester masterbatch with a moisture content of 28 ppm to polyester chips in a mass ratio of 12:88 for melt spinning to prepare the cationic dyeable flame-retardant high-strength polyester fiber; wherein the intrinsic viscosity of the polyester chip is 1.1 dL/g and the melt index is 15 g/10min;

the spinning process is a spinning process of the POY fiber, and the spinning process parameters are: a spinning box temperature of 300°C; a cooling and blowing temperature of 10°C, a wind speed of 1.5 m/s, a relative humidity of 85%; a first godet wheel speed of 3500 m/min, a second godet wheel speed of 3500 m/min, and a winding speed of 3500 m/min.

### Example 6

A method for preparing a cationic dyeable flame-retardant high-strength polyester fiber, the specific process is as follows:

feeding the POY fiber prepared in Example 1 into the first roller, and the DTY fiber is obtained through a yarn guide porcelain, a hot box, another yarn guide porcelain, a false twister, a second roller, an interlacing device, a third roller, a tanker, a winding roller and a wound DTY spindle.

The prepared cationic dyeable flame-retardant high-strength polyester fiber (DTY fiber) has an orientation degree of 0.92, a tensile breaking strength of 4.5 cN/dtex, a cationic dye uptake rate of 98%, and an LOI of 33%. FIG. 1 shows the SEM image of the cross section of the fiber, it can be seen that the cationic dyeable flame-retardant polyester masterbatch is dispersed on the fiber surface to form a skin layer of 2-5 µm, which is because after the masterbatch is blended with the polyester, the fluidity of the masterbatch is higher than that of polyester.

### Comparison 1

A method for preparing a flame-retardant polyester fiber, is basically the same as Example 6, except that the method for preparing the POY fiber is as follows: adding a dried flame-retardant masterbatch (existing flame-retardant masterbatch, brand: Exolit^{®} OP 1240) with a moisture content of 29 ppm to polyester chips in a mass ratio of 4:96 for melt spinning to prepare the flame-retardant polyester fiber; wherein the intrinsic viscosity of the polyester chip is 0.6 dL/g, and the melt index is 30 g/10min; the spinning process is a spinning process of the POY fiber, and the spinning process parameters are: a spinning box temperature of 250°C; a cooling and blowing temperature of 50°C, a wind speed of 0.1 m/s, a relative humidity of 55%; a first godet wheel speed of 2500 m/min, a second godet wheel speed of 2500 m/min, and a winding speed of 2500 m/min.

The prepared flame-retardant polyester fiber (DTY fiber) has an orientation degree of 0.80, a tensile breaking strength of 2.5 cN/dtex, a cationic dye uptake rate of 30%, and an LOI of 28%.

Compared with Example 6, the orientation degree, tensile breaking strength, dye uptake, and LOI value of Comparison 1 are much lower than those of Example 6, because the flame-retardant masterbatch used in Comparison 1 does not contain a polyester segment, and its blending compatibility with polyester is lower than that of the cationic dyeable flame-retardant polyester masterbatch of Example 1, and its fluidity is poor, so this type of masterbatch is basically widely used in the field of plastics. In order to obtain a better flame retardant effect, a relatively large amount of this type of masterbatch is added, the improvement in flame retardancy is extremely limited with an addition amount of 4% in Comparison 1. At the same time, the molecular weight of the masterbatch is relatively small, and it is more blended in the form of small molecules in polyester, and it is impossible to achieve the same tensile orientation as the main part of the polyester, which causes a significant decrease in the mechanical properties of the fiber.

In the present invention, the macromolecular functional masterbatch is introduced into the polyester melt for spinning by a blending modification method, which has little effect on the regularity of the polyester and the orientation of the fiber, so the mechanical strength of the fiber is not significantly affected. At the same time, the masterbatch has high fluidity and is easy to disperse on the fiber surface during the blending process with the polyester, thereby achieving a flame retardant effect at a relatively small addition amount.

### Comparison 2

A method for preparing a cationic dyeable flame-retardant polyester fiber, is basically the same as Example 6, except that the method for preparing the POY fiber is as follows:
(1) preparation of raw materials;
   CEPPA as the phosphorus flame retardant;
   ethylene glycol as the diol;
   ethylene glycol antimony as the catalyst;
   sodium sulfoisophthalate;
(2) the preparation process of oligomer A is as follows: after mixing the phosphorus flame retardant, the diol and the catalyst, carrying out the esterification reaction under the protection of nitrogen to obtain oligomer A; the temperature of the esterification reaction is 220°C, the pressure is 0.5 MPa, and the time is 3h; wherein the molar ratio of the phosphorus flame retardant to the diol is 1:1.15, and the mass of the catalyst is 0.001% of the mass of the phosphorus flame retardant;
(3) the preparation process of oligomer B is as follows: after mixing sodium isophthalate sulfonate, the diol and the catalyst, carrying out the esterification reaction under the protection of nitrogen to obtain oligomer B; the temperature of the esterification reaction is 220°C, the pressure is 0.5 MPa, and the time is 3h; wherein the molar ratio of sodium isophthalate sulfonate to the diol is 1:1.15, and the mass of the catalyst is 0.001% of the mass of sodium isophthalate sulfonate;
(4) mixing oligomer A, oligomer B and ethylene terephthalate, then carrying out the polycondensation reaction at a temperature of 280°C and an absolute pressure of 100 Pa for 5 hours to obtain the cationic dyeable flame-retardant polyester; wherein the ratio of the sum of the molar weight of oligomer A and oligomer B to the molar weight of ethylene terephthalate is 1.2:98.8; the ratio of the molar amount of the phosphorus flame retardant when preparing oligomer A to the molar amount of sodium isophthalate sulfonate when preparing oligomer B is 2:8;
(5) melt spinning the dried cationic dyeable flame-retardant polyester with a moisture content of 29 ppm to prepare the cationic dyeable flame-retardant polyester fiber;
   the spinning process is a spinning process of the POY fiber, and the spinning process parameters are: a spinning box temperature of 250°C; a cooling and blowing temperature of 50°C, a wind speed of 0.1 m/s, a relative humidity of 55%; a first godet wheel speed of 2500 m/min, a second godet wheel speed of 2500 m/min, and a winding speed of 2500 m/min.

The tensile breaking strength of the cationic dyeable flame-retardant high-strength polyester fiber prepared in Example 6 is 4.5 cN/dtex, and the tensile breaking strength of the cationic dyeable flame-retardant polyester fiber prepared in Comparison 2 is 3.2 cN/dtex, by comparison, it can be seen that the tensile breaking strength of the fiber of Example 6 is higher than that of Comparison 2, because in Comparison 2, the flame retardant and the cationic dyeable component are introduced into the polyester based on a copolymerization reaction, which reduces the regularity of the polyester, resulting in a decrease in the original orientation and crystallinity of the polyester, and a lower strength of the polyester fiber finally obtained. In Example 6, the functional masterbatch is introduced into the polyester melt by a blending modification method for spinning, which has little effect on the regularity of the polyester and the orientation of the fiber. Therefore, the mechanical strength of the fiber is not significantly affected, and the original mechanical strength of the fiber is maintained while achieving cationic dyeability and flame retardant functions.

### Example 7

A method for preparing a cationic dyeable flame-retardant high-strength polyester fiber, the specific process is as follows:
feeding the POY fiber prepared in Example 2 into the first roller, and the DTY fiber is obtained through a yarn guide porcelain, a hot box, another yarn guide porcelain, a false twister, a second roller, an interlacing device, a third roller, a tanker, a winding roller and a wound DTY spindle.

The prepared cationic dyeable flame-retardant high-strength polyester fiber (DTY fiber) has an orientation degree of 0.93, a tensile breaking strength of 4.6 cN/dtex, a cationic dye uptake rate of 97%, and an LOI of 32%.

### Example 8

A method for preparing a cationic dyeable flame-retardant high-strength polyester fiber, the specific process is as follows:
feeding the POY fiber prepared in Example 3 into the first roller, and the DTY fiber is obtained through a yarn guide porcelain, a hot box, another yarn guide porcelain, a false twister, a second roller, an interlacing device, a third roller, a tanker, a winding roller and a wound DTY spindle.

The prepared cationic dyeable flame-retardant high-strength polyester fiber (DTY fiber) has an orientation degree of 0.94, a tensile breaking strength of 4.8 cN/dtex, a cationic dye uptake rate of 96%, and an LOI of 31%.

### Example 9

A method for preparing a cationic dyeable flame-retardant high-strength polyester fiber, is basically the same as Example 1, except that the spinning process is not a spinning process of the POY fiber, but a spinning process of the FDY fiber, and the spinning process parameters are: a spinning box temperature of 250°C; a cooling and blowing temperature of 10°C, a wind speed of 0.1 m/s, a relative humidity of 55%; a roller speed of a first godet roller of 2500 m/min, a roller speed of a second godet roller of 3000 m/min, and a winding speed of 3000 m/min.

The prepared cationic dyeable flame-retardant high-strength polyester fiber (FDY fiber) has an orientation degree of 0.9, a tensile breaking strength of 4.5 cN/dtex, a cationic dye uptake rate of 98%, and an LOI of 32%.

### Example 10

A method for preparing a cationic dyeable flame-retardant high-strength polyester fiber, is basically the same as Example 1, except that the spinning process is not a spinning process of the POY fiber, but a spinning process of the FDY fiber, and the spinning process parameters are: a spinning box temperature of 275°C; a cooling and blowing temperature of 35°C, a wind speed of 0.6 m/s, a relative humidity of 70%; a roller speed of a first godet roller of 2750 m/min, a roller speed of a second godet roller of 3750 m/min, and a winding speed of 3750 m/min.

The prepared cationic dyeable flame-retardant high-strength polyester fiber (FDY fiber) has an orientation degree of 0.92, a tensile breaking strength of 4.6 cN/dtex, a cationic dye uptake rate of 96%, and an LOI of 31%.

### Example 11

A method for preparing a cationic dyeable flame-retardant high-strength polyester fiber, is basically the same as Example 1, except that the spinning process is not a spinning process of the POY fiber, but a spinning process of the FDY fiber, and the spinning process parameters are: a spinning box temperature of 300°C; a cooling and blowing temperature of 50°C, a wind speed of 1.5 m/s, a relative humidity of 95%; a roller speed of a first godet roller of 3000 m/min, a roller speed of a second godet roller of 4500 m/min, and a winding speed of 4500 m/min.

The prepared cationic dyeable flame-retardant high-strength polyester fiber (FDY fiber) has an orientation degree of 0.94, a tensile breaking strength of 4.8 cN/dtex, a cationic dye uptake rate of 95%, and an LOI of 30%.

## Claims

1. A method for preparing a cationic dyeable flame-retardant high-strength polyester fiber, comprising: after mixing oligomer A, oligomer B, and ethylene terephthalate and carrying out a polycondensation reaction to obtain a cationic dyeable flame-retardant polyester masterbatch, adding the cationic dyeable flame-retardant polyester masterbatch to polyester chips according to a certain ratio for melt spinning, to prepare a cationic dyeable flame-retardant high-strength polyester fiber;
wherein oligomer A is prepared by an esterification reaction of a phosphorus flame retardant and a diol; the phosphorus flame retardant is more than one selected from CEPPA, DDP and BCPPO; oligomer B is prepared by the esterification reaction of sodium isophthalate sulfonate and a diol;
wherein a degree of polymerization of oligomer A is 3-7; the degree of polymerization of oligomer B is 2-6;
wherein a ratio of the sum of the molar weight of oligomer A and oligomer B to the molar weight of ethylene terephthalate is 3:7-6:4.

2. The method of claim 1, wherein a molar ratio of the phosphorus flame retardant to the sodium isophthalate sulfonate is 2:8-8:2.

3. The method of claim 2, wherein a preparation process of oligomer A or oligomer B is as follows: after mixing X, the diol and a catalyst, carrying out the esterification reaction under the protection of protective gas to obtain oligomer A or oligomer B, X is the phosphorus flame retardant or sodium isophthalate sulfonate; the temperature of the esterification reaction is 140-220°C, the pressure is 0.01-0.5 MPa, and the time is 3-6 h.

4. The method of claim 3, wherein the molar ratio of X to the diol is 1:1.15-1:1.5, and a mass of the catalyst is 0.001-0.05% of the mass of X.

5. The method of claim 3, wherein the diol is ethylene glycol, propylene glycol, butylene glycol or pentanediol; and the catalyst is ethylene glycol antimony or ethylene glycol titanium.

6. The method of claim 1, wherein the temperature of the polycondensation reaction is 220-280°C, an absolute pressure is below 100 Pa, and the time is 3-5 h; a number average molecular weight of the cationic dyeable flame-retardant polyester masterbatch is 15000-25000 g/mol, a melt index is 30-90 g/10min, a semi-crystallization time t_{1/2} is 3-15 min, and a crystallinity is 20-40%.

7. The method of claim 1, wherein a mass ratio of the cationic dyeable flame-retardant polyester masterbatch to the polyester chip is 4:96-12:88; an intrinsic viscosity of the polyester chip is 0.60-1.10 dL/g, and the melt index is 15-30 g/10min.

8. The method of claim 1, wherein the cationic dyeable flame-retardant high-strength polyester fiber is a POY fiber or a DTY fiber made from the POY fiber;
wherein spinning process parameters of the POY fiber are: a spinning box temperature of 250-300°C; a cooling and blowing temperature of 10-50°C, a wind speed of 0.1-1.5 m/s, a relative humidity of 55-95%; a first godet wheel speed of 2500-3500 m/min, a second godet wheel speed of 2500-3500 m/min, and a winding speed of 2500-3500 m/min;
wherein a preparation process of the DTY fiber comprises: feeding the POY fiber into the first roller, and the DTY fiber is obtained through a yarn guide porcelain, a hot box, another yarn guide porcelain, a false twister, a second roller, an interlacing device, a third roller, a tanker, a winding roller and a wound DTY spindle;
alternatively, the cationic dyeable flame-retardant high-strength polyester fiber is an FDY fiber, and spinning process parameters are: a spinning box temperature of 250-300°C; a cooling and blowing temperature of 10-50°C, a wind speed of 0.1-1.5 m/s, a relative humidity of 55-95%; a roller speed of a first godet roller of 2500-3000 m/min, a roller speed of a second godet roller of 3000-4500 m/min, and a winding speed of 3000-4500 m/min.

9. The method of claim 1, wherein the cationic dyeable flame-retardant high-strength polyester fiber has an orientation degree ≥0.90, a tensile breaking strength ≥4.5 cN/dtex, a cationic dye uptake rate of more than 95%, and a limiting oxygen index (LOI) ≥30%.
